(19) Europäisches Patentamt
European Patent Office
Office européen des brevets

(11) **EP 4 150 502 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **21728011.4**

(22) Anmeldetag: **10.05.2021**

(51) Internationale Patentklassifikation (IPC):
**G06G 7/16** *(2006.01)* **G06N 3/063** *(2023.01)*
**G06G 7/161** *(2006.01)*

(52) Gemeinsame Patentklassifikation (CPC):
**G06N 3/065;** G06G 7/161

(86) Internationale Anmeldenummer:
**PCT/EP2021/062305**

(87) Internationale Veröffentlichungsnummer:
**WO 2021/228757 (18.11.2021 Gazette 2021/46)**

(54) **VERFAHREN ZUR ANALOGEN MULTIPLIKATION UND/ODER BERECHNUNG EINES SKALARPRODUKTES MIT EINER SCHALTUNGSANORDNUNG, INSBESONDERE FÜR KÜNSTLICHE NEURONALE NETZWERKE**

METHOD FOR THE ANALOGUE MULTIPLICATION AND/OR CALCULATION OF A SCALAR PRODUCT WITH A CIRCUIT ASSEMBLY, IN PARTICULAR FOR ARTIFICIAL NEURAL NETWORKS

PROCÉDÉ DE MULTIPLICATION ANALOGIQUE ET/OU DE CALCUL D'UN PRODUIT SCALAIRE AU MOYEN D'UN ENSEMBLE CIRCUIT, EN PARTICULIER POUR DES RÉSEAUX DE NEURONES ARTIFICIELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2020 DE 102020113088**

(43) Veröffentlichungstag der Anmeldung:
**22.03.2023 Patentblatt 2023/12**

(73) Patentinhaber: **Universität Stuttgart
70174 Stuttgart (DE)**

(72) Erfinder: **GRÖZING, Markus
70176 Stuttgart (DE)**

(74) Vertreter: **Gagel, Roland
Patentanwalt Dr. Roland Gagel
Landsberger Strasse 480a
81241 München (DE)**

(56) Entgegenhaltungen:
**US-A- 3 731 206      US-A- 4 956 564**

• **MASATOSHI YAMAGUCHI ET AL: "An Energy-efficient Time-domain Analog VLSI Neural Network Processor Based on a Pulse-width Modulation Approach", ARXIV.ORG, CORNELL UNIVERSITY LIBRARY, 201 OLIN LIBRARY CORNELL UNIVERSITY ITHACA, NY 14853, 16 February 2019 (2019-02-16), XP081031450**

## Beschreibung

### Technisches Anwendungsgebiet

Die vorliegende Erfindung betrifft ein Verfahren zur analogen Multiplikation und/oder zur analogen Berechnung eines Skalarproduktes, das durch Multiplikation eines ersten Wertes mit einem zweiten Wert eines jeweiligen Wertepaares und Summation von Ergebnissen der Multiplikation für mehrere Wertepaare gebildet wird, mit einer Schaltungsanordnung. Die Erfindung betrifft auch die Anwendung des Verfahrens in einem künstlichen neuronalen Netzwerk (KNN).

In der elektronischen Signalverarbeitung werden heutzutage die meisten Schaltungsteile im digitalen Bereich mit Hilfe der CMOS-Technologie und binärer statischer Logik realisiert. Analog-Digital-(ADC) und Digital-Analog-Wandlung (DAC) werden soweit wie möglich an die Ränder des Systems verlagert. Dieser Ansatz der hauptsächlich digitalen Signalverarbeitung hat stark von der bisherigen Skalierung der Halbleitertechnologie, d.h. vom Mooreschen Gesetz, profitiert. Die technologiebedingten Effizienzsteigerungen haben den ständig steigenden Bedarf an Verarbeitungsleistung ausgeglichen. Allerdings hat sich das Mooresche Gesetz inzwischen erheblich verlangsamt, so dass dieser Ausgleich gerade bei dem zunehmenden Bedarf an Signalverarbeitungsleistung im Bereich der künstlichen Intelligenz (KI) in Zukunft gefährdet ist. Vor allem die Anforderungen an die Rechenleistung tiefer neuronaler Netzwerke (DNN) steigen wesentlich schneller als die Skalierungsgewinne der zugrunde liegenden CMOS-Technologie. Es besteht daher ein dringender Bedarf an neuen energieeffizienten Techniken der Signalverarbeitung, die sich in künstlichen neuronalen Netzwerken einsetzen lassen.

### Stand der Technik

In künstlichen neuronalen Netzwerken kommen derzeit vor allem digitale Signalverarbeitungstechniken zum Einsatz, die auf CMOS-Technologie basieren. Diese Techniken stoßen jedoch aus Sicht der Energieeffizienz bei ständig zunehmenden Anforderungen an die Rechenleistung in absehbarer Zeit an ihre Grenzen.

Inzwischen werden unter anderem auch Ansätze verfolgt, bei denen eine Mischsignalverarbeitung auf Basis von CMOS-Technologie unter Einsatz von Switched-Capacitor (SC) Ladungsumverteilungs-Techniken zur analogen Multiplikation oder Summation eingesetzt wird. Bei diesen Ansätzen werden speziell zugeordnete SRAM-Arrays für die Speicherung der Eingangswerte (Activations) und Gewichtsfaktoren (Weigths) und ein Neuronen-Array zur Berechnung des Skalarproduktes aus Eingangs- und Gewichtsvektor verwendet. Im Layout des entsprechenden integrierten Schaltkreises stellen Speicherarray und Neuronen-Array örtlich getrennte Einheiten dar. Zur weiteren Reduzierung des Energieverbrauchs für den Datentransport zwischen diesen Einheiten ist es auch bekannt, beide Einheiten in eine einzelne Einheit zu integrieren. Dieser Ansatz wird als In-Memory-Verarbeitung bezeichnet.

M. Bavandpour et al., "Mixed-Signal Neuromorphic Inference Accelerators: Recent Results and Future Prospects", in 2018 IEEE International Electron Devices Meeting (IEDM), geben einen Überblick über Schaltungsanordnungen zur Vektor-Matrix-Multiplikation (VMM). Bei einer dieser Schaltungsanordnungen wird jeder Gewichtsfaktor in Floating-Gate-Zellen gespeichert, die als Spannungs-gesteuerte Stromquelle implementiert sind. Sowohl die Eingangsals auch die Ausgangswerte werden dabei als Pulslänge von Spannungspulsen kodiert.

Ein weiteres Beispiel für einen analogen Multiplikator, bei dem ein erster Wert als Gate-Impulsbreite und ein zweiter Wert als Floating-Gate-Ladung codiert wird, ist aus US4956564 bekannt. Die Aufgabe der vorliegenden Erfindung besteht darin, ein Verfahren zur Multiplikation und/oder Bildung eines Skalarproduktes, das sich in CMOS-Technologie implementieren lässt und eine energieeffiziente Betriebsweise ermöglicht, sowie ein künstliches neuronales Netzwerk anzugeben, in dem das Verfahren zum Einsatz kommt.

### Darstellung der Erfindung

Die Aufgabe wird mit den Verfahren gemäß Patentanspruch 1 und 2 sowie den künstlichen neuronalen Netzwerken gemäß Patentanspruch 10 und 11 gelöst. Vorteilhafte Ausgestaltungen der Verfahren sowie der künstlichen neuronalen Netzwerke sind Gegenstand der abhängigen Patentansprüche oder lassen sich der nachfolgenden Beschreibung sowie den Ausführungsbeispielen entnehmen.

Bei dem vorgeschlagenen Verfahren zur analogen Multiplikation wird ebenso wie bei dem Verfahren zur analogen Berechnung eines Skalarproduktes eine Schaltungsanordnung eingesetzt, die eine Serienschaltung aus einem ersten FET und einem als Stromquelle dienenden zweiten FET oder FET-Array aus mehreren parallel geschalteten zweiten FETs, eine Ladeeinrichtung und wenigstens eine Kapazität aufweist, die über die Ladeeinrichtung vorgeladen und über die Serienschaltung aus dem ersten FET und dem wenigstens einen zweiten FET oder FET-Array entladen werden kann. Die Ladeeinrichtung kann dabei lediglich aus einem Schalter gebildet sein, über den die Kapazität mit einer Spannungsquelle verbunden werden kann. Zur Multiplikation eines ersten Wertes mit einem zweiten Wert wird die Kapazität zunächst vorgeladen. Der erste Wert wird dabei als Pulslänge eines Spannungspulses kodiert an das Gate des ersten FET und der zweite Wert als Spannungsamplitude kodiert an das Gate des zweiten FET oder als binäre Spannungsamplituden kodiert an die Gates der parallel geschalteten zweiten FETs angelegt, so dass sich die Kapazität für einen Zeitraum, der durch die Pulslänge des am Gate des ersten FETs anliegenden Spannungspulses vorgegeben wird, mit einem Entladungsstrom, der durch die am Gate des zweiten FETs oder an den Gates der parallel geschalteten zweiten FETs anliegende(n) Spannungsamplitude(n) vorgegeben wird, zumindest teilweise entlädt. Das Ergebnis der Multiplikation ist dann entweder aus der Restladung oder Spannung der Kapazität oder - bei einer weiter unten beschriebenen Ausgestaltung unter Berücksichtigung des Vorzeichens des ersten Wertes - aus einer Spannungs- oder Ladungsdifferenz zwischen dieser und einer weiteren Kapazität bestimmbar.

Für die Berechnung des Skalarproduktes wird eine analoge Schaltungsanordnung eingesetzt, die mehrere parallel geschaltete Serienschaltungen aus einem ersten FET und einem als Stromquelle dienenden zweiten FET oder FET-Array aus mehreren parallel geschalteten zweiten FETs, eine Ladeeinrichtung und wenigstens eine Kapazität aufweist, die über die Ladeeinrichtung vorgeladen und über die Serienschaltungen aus dem ersten FET und dem zweiten FET oder FET-Array entladen werden kann. Unter der Berechnung eines Skalarproduktes wird hierbei die Multiplikation eines ersten Wertes mit einem zweiten Wert eines Wertepaares und Summation von Ergebnissen der Multiplikation für mehrere Wertepaare verstanden, wie dies bei der Multiplikation zweier Vektoren mit Vektorkomponenten (als Werte) im kartesischen Koordinatensystem der Fall ist. Jedem der Wertepaare des Skalarproduktes wird dabei eine der Serienschaltungen zugeordnet. Die Anzahl der Serienschaltungen muss dabei wenigstens der Anzahl der Wertepaare des Skalarproduktes bzw. der Vektorkomponenten der miteinander zu multiplizierenden Vektoren entsprechen. Die Kapazität wird zur Berechnung des Skalarproduktes wiederum zunächst vorgeladen. Für jedes der Wertepaare wird der erste Wert als Pulslänge eines Spannungspulses kodiert an das Gate des ersten FET der dem jeweiligen Wertepaar zugeordneten Serienschaltung und der zweite Wert als Spannungsamplitude kodiert an das Gate des zweiten FET oder als binäre Spannungsamplituden kodiert an die Gates der parallel geschalteten zweiten FETs der zugeordneten Serienschaltung angelegt, so dass sich die Kapazität jeweils für einen Zeitraum, der durch die Pulslänge des am Gate des ersten FETs der jeweiligen Serienschaltung anliegenden Spannungspulses vorgegeben wird, mit einem Entladungsstrom, der durch die am Gate des zweiten FETs oder an den Gates der parallel geschalteten zweiten FETs der jeweiligen Serienschaltung anliegende(n) Spannungsamplitude(n) vorgegeben wird, zumindest teilweise entlädt. Aufgrund der Parallelschaltung der Serienschaltungen addieren sich die Entladungsströme dabei nach dem Kirchhoffschen Gesetz. Ein Ergebnis der Berechnung des Skalarproduktes ist dann entweder aus der Restladung oder Spannung der Kapazität oder - bei einer weiter unten beschriebenen Ausgestaltung unter Berücksichtigung des Vorzeichens des ersten Wertes - aus einer Spannungs- oder Ladungsdifferenz zwischen dieser und einer weiteren Kapazität bestimmbar.

Als Feldeffekttransistoren (FET) werden bei den vorgeschlagenen Verfahren und neuronalen Netzwerken insbesondere Feldeffekttransistoren mit einem isolierenden Gate ("MISFET"), vorzugsweise MOSFETs (Metall-Oxid-Halbleiter-FETS), eingesetzt. Die zu entladende Kapazität kann durch einen Kondensator oder auch durch die parasitären Kapazitäten der verwendeten FETs und Verbindungsleitungen gebildet werden.

Die vorgeschlagenen Verfahren setzen somit eine Schaltungsanordnung mit einer nichtlinearen Übertragungsfunktion ein, die in der Grundausführung aus zwei gestapelten, in Reihe geschalteten FETs und einer Kapazität besteht. Im Folgenden wird diese Schaltungsanordnung aufgrund ihrer Funktion auch als analoger Mischsignal-Multiplizierer (AMS) bezeichnet. Der erste Multiplikandenwert wird als Impulsbreite eines Spannungsimpulses dargestellt, der an das Gate des ersten FET angelegt wird. Der zweite Multiplikand wird als analoge Spannung kodiert, die an das Gate des zweiten FET angelegt wird. Ein elektrisches Ladungspaket, das proportional zum Produkt der Multiplikanden ist, wird auf der Kapazität angesammelt bzw. von deren Ladung abgezogen. Durch den Anschluss weiterer gestapelter FET-Serienschaltungen an die Kapazität wird die Berechnung eines Skalarprodukts mit einer minimalen Anzahl von Bauelementen ermöglicht. Die analoge Multiplikation lässt sich dabei mit geringem Energieeinsatz durchführen, wie später bei den Ausführungsbeispielen noch näher ausgeführt wird. Durch den einfachen Aufbau mit FETs und Kapazität lässt sich die eingesetzte Schaltungsanordnung in CMOS-Technologie realisieren. Im Gegensatz zu den bisher in der elektronischen Signalverarbeitung bevorzugten digitalen Verarbeitungstechniken mit Binärsignalen nutzen die vorgeschlagenen Verfahren eine analog-gemischte Signalverarbeitung, bei der ausgewählte elektrische Knoten wesentlich mehr Informationen im analogen Bereich tragen, die physikalisch nur durch Rauschen und Leckagen begrenzt sind. Die Verfahren ermöglichen die Ausführung komplexer arithmetischer Operationen an einzelnen kapazitiven Schaltungsknoten, wobei so wenig Komponenten wie möglich beteiligt sind und die Anzahl der erforderlichen Schaltungsknoten gegenüber digitalen Techniken drastisch reduziert wird. Besonders vorteilhaft lassen sich die Verfahren bzw. darin verwendeten Schaltungsanordnungen für die Rechenoperationen in Neuronen oder Neuronenschichten in künstlichen neuronalen Netzwerken einsetzen. Die grundlegende Funktionsweise künstlicher Neuronen kann auf die vorgeschlagene AMS-Schaltungsanordnung mit geringer Anzahl an Schaltungsknoten und Bauelementen abgebildet und mit einer fortschrittlichen CMOS-Foundry-Technologie implementiert werden.

In einer bevorzugten Anwendung des Verfahrens zur Berechnung eines Skalarprodukts in einem künstlichen neuronalen Netzwerk ist die Schaltungsanordnung aus den parallel verschalteten Serienschaltungen, der Ladeeinrichtung und der Kapazität jeweils Teil eines künstlichen Neurons. Jedes Wertepaar entspricht dabei jeweils einem Gewichtsfaktor und einem Eingangswert des künstlichen Neurons. In der bevorzugten Ausgestaltung wird dabei als erster Wert jedes Wertepaares der Gewichtsfaktor und als zweiter Wert der Eingangswert gewählt. Somit werden die Gewichtsfaktoren jeweils als Pulslänge eines Spannungspulses kodiert an das Gate des ersten FET und die Eingangswerte als Spannungsamplitude kodiert an das Gate des zweiten FET angelegt. Die in der Regel als Digitalwerte vorliegenden Gewichtsfaktoren müssen dabei geeignet gespeichert werden, vorzugsweise in entsprechenden SRAMs, und werden jeweils mittels eines Digital-Zeit-Wandlers (DTC) in die entsprechenden Spannungspulse gewandelt.

In einer alternativen Ausgestaltung des vorgeschlagenen Verfahrens zur Berechnung eines Skalarprodukts in einem künstlichen neuronalen Netzwerk wird als erster Wert des Wertepaares der Eingangswert und als zweiter Wert der Gewichtsfaktor gewählt. In diesem Falle wird vorzugsweise nicht nur ein, sondern es werden mehrere zweite FETs in einer Parallelschaltung eingesetzt, wobei wiederum die Gewichtsfaktoren entsprechend digital gespeichert werden. Die einzelnen binären Ziffern des jeweiligen Gewichtsfaktors steuern dann - als Spannungsamplitude kodiert - die einzelnen zweiten FETs des FET-Arrays, d.h. der Parallelschaltung der zweiten FETs. Dies wird im Ausführungsbeispiel noch näher erläutert.

Durch Nutzung von zwei parallelen Zweigen mit ersten FETs, die mit dem wenigstens einen zweiten FET oder FET-Array in Serienschaltung verbunden sind, und zwei Kapazitäten lassen sich auch vorzeichenbehaftete Gewichtsfaktoren verarbeiten. Auch vorzeichenbehaftete Eingangswerte können durch entsprechende Erweiterung der Schaltungstopologie implementiert werden.

Mit dem vorgeschlagenen Verfahren zur Berechnung des Skalarprodukts und der darin eingesetzten Schaltungsanordnung lässt sich ein neuronales Netzwerk aufbauen, bei dem die Neuronen durch die Schaltungsanordnungen gebildet werden. Je nach Ausgestaltung müssen zusätzlich Digital-Zeit-Wandler (DTC) implementiert sein. Auch geeignete Transferschaltungen für die Verschiebung der Ladung am Ausgang eines Neurons an die Eingänge von Neuronen der jeweils nachfolgenden Schicht können je nach Ausgestaltung erforderlich sein. Ein Beispiel für eine derartige Transferschaltung ist aus den nachfolgenden Ausführungsbeispielen entnehmbar.

Ein wesentlicher Vorteil der vorgeschlagenen Verfahren sowie der darin eingesetzten Schaltungsanordnungen ist ein sehr geringer Stromverbrauch. Eine etwa 500-fache Energieeffizienzsteigerung wird in einem 28 nm CMOS AMS im Vergleich zu einem digitalen 8 Bit x 8 Bit Feldmultiplizierer erwartet. Die bei den Verfahren eingesetzten Schaltungsanordnungen lassen sich auf kommerziellen Standard-CMOS-Technologien implementieren, die auch für eine Vielzahl von Standard- und anwendungsspezifischen integrierten Schaltungen verwendet werden. Damit können die vorgeschlagenen Schaltungsanordnungen in einem hybriden Ansatz zusammen mit traditionellen Analog-, HF-, Digital- und Speicherblöcken auf einem einzigen Chip in einem "System-on-Chip-Ansatz" verwendet werden. Eine AMS-IP-Bibliothek ermöglicht den Entwurf einer AMS-Coprozessor-IP, die zusammen mit anderen Blöcken auf einem anwendungsspezifischen integrierten Schaltkreis (ASIC) oder zusammen mit Standard-COTS-Digitalprozessor-ICs, d.h. zusammen mit Standard-Smartphone-Prozessoren, platziert werden kann, um eine äußerst energieeffiziente gemeinsame Verarbeitung von spezifischen KNN-bezogenen Aufgaben zu ermöglichen. Durch die Verwendung der etablierten Standard-CMOS-Logiktechnologie werden leistungshungrige Chip-zu-Chip-Schnittstellen für solche Hybridsysteme mit herkömmlicher digitaler und neuer analoger Signalverarbeitung vermieden. Die vorgeschlagenen Verfahren lassen sich besonders gut für Anwendungen einsetzen, die keine außergewöhnliche Präzision erfordern. Auch die Entwicklung von Klassifikationsaufgaben auf Basis neuronaler Netzwerke kann durch die mit dem vorgeschlagenen Verfahren verbesserte Energieeffizienz unterstützt werden, beispielsweise bei der RADAR- und LIDAR-Objekterkennung für autonomes Fahren im Automobil oder bei der mobilen, Personen-unterstützenden Sprach- und Bilderkennung.

## Kurze Beschreibung der Zeichnungen

Die vorgeschlagenen Verfahren werden in Verbindung mit einem künstlichen neuronalen Netzwerk im Folgenden anhand von Ausführungsbeispielen in Verbindung mit den Zeichnungen nochmals näher erläutert. Hierbei zeigen:

Fig. 1    einen Ausschnitt von drei Schichten aus einem künstlichen neuronalen Netzwerk (Teilabbildung a) sowie die Struktur eines künstlichen Neurons (Teilabbildung b);

Fig. 2    ein Beispiel für die Schaltungsanordnung zur Multiplikation (Teilabbildung a) sowie die Schaltungsanordnung zur Berechnung eines Skalarprodukts (Teilabbildung b) gemäß der vorliegenden Erfindung;

Fig. 3    ein Beispiel für eine DTC-Schaltung (Teilabbildung a) sowie die zeitliche Entwicklung der Spannungen innerhalb der Schaltung (Teilabbildung b);

Fig. 4    ein Beispiel für eine alternative Schaltungsanordnung zur Multiplikation gemäß der vorliegenden Erfindung;

Fig. 5    Beispiele für die Implementierung vorzeichenbehafteter Gewichtsfaktoren in die vorgeschlagene Schaltungsanordnung;

Fig. 6 ein Beispiel für die matrixartige Anordnung mehrerer der vorgeschlagenen Multiplikations-Schaltungsanordnungen zur Implementierung einer neuronalen Schicht;

Fig. 7 ein Beispiel für eine Ladungstransferschaltung zum Ladungstransfer eines Ladungsdefizits vom Ausgang eines Neurons zum Eingang des nächsten Neurons; und

Fig. 8 ein Beispiel für die Ausgestaltung eines neuronalen Netzwerkes gemäß der vorliegenden Erfindung.

## Wege zur Ausführung der Erfindung

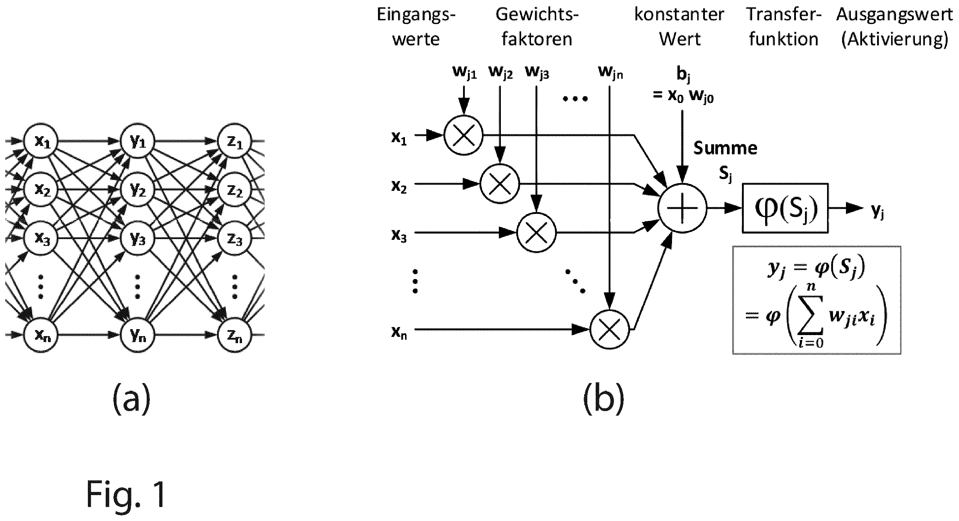

In den nachfolgenden Beispielen wird das vorgeschlagene Verfahren mit der zugehörigen Schaltungsanordnung zur Berechnung von Skalarprodukten in einem künstlichen neuronalen Netzwerk eingesetzt. Figur 1 zeigt hierzu in Teilabbildung a einen Ausschnitt mit drei Schichten eines künstlichen neuronalen Netzwerkes. In Teilabbildung b ist die Grundstruktur eines künstlichen Neurons dargestellt, hier für das j-te Neuron in der Schicht y des neuronalen Netzwerkes. Die Eingangswerte $x_1$ bis $x_n$ - also die Aktivierungen aus der vorangegangenen Schicht x - werden mit den entsprechenden Gewichtungsfaktoren bzw. Gewichten $w_{j1}$ bis $w_{jn}$ multipliziert und die Multiplikationsergebnisse sowie ein konstanter Wert $b_j = x_0 \cdot w_{j0}$ addiert. Die resultierende Summe $S_j$ entspricht dem Skalarprodukt aus dem Aktivierungsvektor $\vec{X}$ der Schicht x des neuronalen Netzwerkes und dem Gewichtsvektor $\vec{W_j}$, der die synaptischen Gewichte der Eingangssignale zu Neuron $y_j$ darstellt. Weiterhin stellt die Summe $S_j$ das Argument der Transferfunktion $\varphi(S_j)$ dar, die die endgültige Neuronenaktivierung $y_j$ erzeugt. Jede Multiplikation $x_i \cdot w_{ji}$ entspricht einer einzelnen synaptischen Operation.

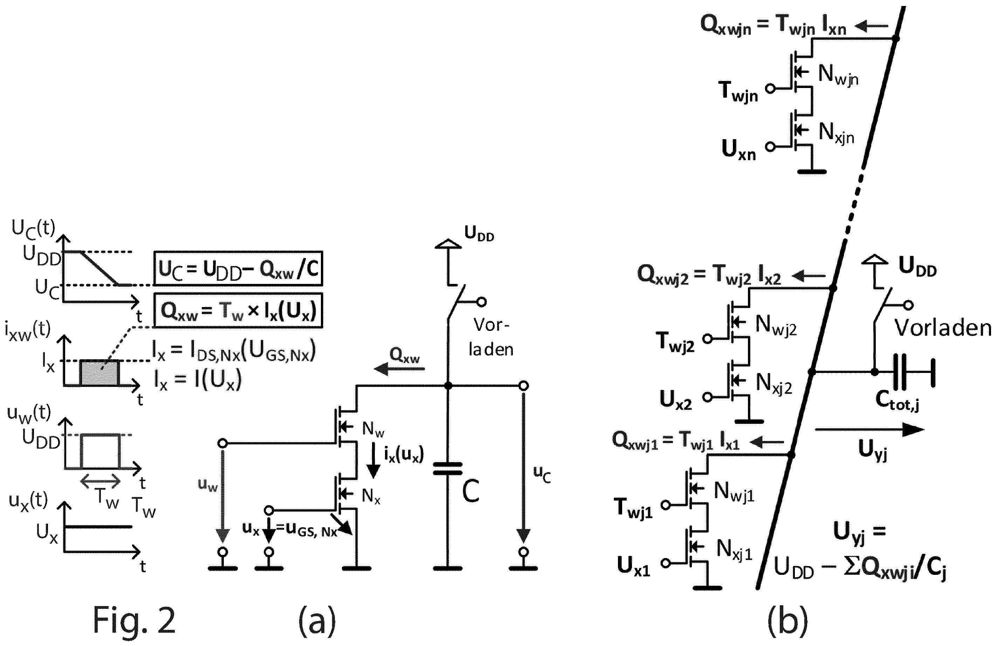

Mit dem vorgeschlagenen Verfahren wird die in einem Neuron stattfindende Berechnung des Skalarproduktes energieeffizient durchgeführt. Figur 2a veranschaulicht das Kernschema der vorgeschlagenen Schaltungsanordnung, d.h. der AMS Multiplikationszelle (AMS: analoger Mischsignal-Multiplizierer), die auf zwei gestapelten FETs, hier MOSFETs, und einem hier als Kapazität eingesetzten Kondensator basiert. Die Initialisierung erfolgt durch Vorladen des Kondensators C auf die positive Versorgungsspannung $U_{DD}$. Das Schaltungsprinzip ähnelt der Vorlade- und Auswertefunktion in der CMOS-Domino-Logik. Figur 2a zeigt die beiden in Serie verschalteten MOSFETs $N_w$, $N_x$, den Kondensator C sowie die mit der Versorgungsspannung $U_{DD}$ verbundene Vorladeeinrichtung, hier in Form eines Schalters. Das Grundschema dieser AMS-Multiplikationszelle wird in zwei unterschiedlichen Ausführungsformen des vorgeschlagenen Verfahrens verwendet.

In der bevorzugten Ausgestaltung wird das Multiplikationsergebnis wie folgt ausgewertet. Der untere MOSFET $N_x$ arbeitet als Stromquellentransistor, der durch seine analoge Gate-Source-Spannung $u_{GS,Nx} = u_x$ gesteuert wird, die über einen Eingangswert x, dem Ausgang der vorhergehenden Neuronenschicht, bereitgestellt wird. Die Spannung $u_x$ steuert den Drainstrom $i_x$ über die nichtlineare Transferfunktion $I_x(U_x)$ gemäß der Stromgleichung des MOSFETs. Diese Nichtlinearität ist ein Teil der nichtlinearen Übertragungsfunktion $\varphi$ der vorhergehenden Neuronenschicht. Da der n-Kanal-MOSFET im Anreicherungsmodus eine Schwellenspannung größer als 0 aufweist, ist eine weiche Gleichrichterähnliche Übertragungsfunktion implementiert.

Der Drainstrom $i_x$ wird vom oberen Pol des Kondensators C nur dann abgezogen, wenn der gestapelte MOSFET $N_w$ ebenfalls leitend ist. Durch Setzen seiner Gatespannung auf $U_{DD}$ für eine Zeitspanne $T_W$ entsprechend dem Gewichtsfaktor w wird der obere MOSFET $N_W$ eingeschaltet. Die vom Ausgangsknoten abgezogene Ladung $Q_{XW}$ und die entsprechende Ausgangsspannung $U_C$ lauten:

$$Q_{xw} = T_w \cdot I_x(U_x), \qquad U_C = U_{DD} - \frac{T_w \cdot I_x(U_x)}{C}.$$

Das Ergebnis der Multiplikation entspricht somit der Ladungsmenge $Q_{XW}$, die durch die Reihenschaltung dieser beiden MOSFETs fließt. Die zeitlichen Verhältnisse der Spannungen und Ströme in dieser Schaltungsanordnung sind im linken Teil der Figur 2a dargestellt.

Figur 2b zeigt die Implementierung der vorgeschlagenen Schaltungsanordnung zur Realisierung einer AMS Skalarproduktzelle durch Anwendung des Kirchhoffschen Stromgesetzes auf einen gemeinsamen Ausgangsknoten, in dem alle Ausgangsströme der AMS Multiplikationszellen kumuliert werden. Die entsprechende Parallelschaltung mehrerer Serienschaltungen zweier MOSFETs, der Kondensator C sowie die zugehörige Ladeeinrichtung sind in der Figur 2b schematisch dargestellt. Die Ausgangsspannung $U_{yi}$ lautet:

$$U_{yj} = U_{DD} - \frac{Q_{yj}}{C_{tot,j}} = U_{DD} - \frac{1}{C_{tot,j}} \sum_{i=0}^{n} Q_{xwji} = U_{DD} - \frac{1}{C_{tot,j}} \sum_{i=0}^{n} T_{wji} I_{xi}(U_{xi}).$$

Die künstliche Neuronenfunktion, d.h. ein Skalarprodukt gefolgt von einer nichtlinearen Übertragungsfunktion, wird auf einfache elektrische Netzwerkprinzipien (d.h. den Kirchhoffschen Gesetzen) in Verbindung mit der etablierten FET-Bauteilphysik ($I_{DS}$ = f($U_{GS}$, $U_{DS}$)) abgebildet. Eine Neuronenausgangsaktivierung wird entlang einer einzelnen Leitung mit einer Serie von Multiplizierern implementiert.

Die analoge Multiplikation wird durch die Verwendung von nur zwei kleinen MOSFETs realisiert. Die während des Multiplikationsprozesses zu ladende oder zu entladende Gesamtkapazität kann bei 300 nm breiten MOSFETs $N_x$ und $N_y$ in 22 nm CMOS auf Werte von nur 0,6 fF begrenzt werden. Dies führt zu einem Energieverbrauch der Multiplikation von 0,5 fJ bei einer Versorgungsspannung von 0,8 V. Die geschätzte Betriebsenergie eines 8 Bit x 8 Bit Feldmultiplizierers in 28 nm CMOS-Technologie beträgt hingegen 8 x 30 fJ = 240 fJ (basierend auf 30 fJ für einen einzelnen 8-Bit-Addierer), was eine etwa 500-fache EnergieeffizienzSteigerung für den vorgeschlagenen AMS ergibt.

In der obigen bevorzugten Ausgestaltung werden die Neuroneneingangs-Gewichtungsfaktoren $w_i$ durch die zeitliche Breite $T_{wi}$ von Strompulsen dargestellt, wobei die Stromamplitude $I_{xi}$ die Eingangsaktivierungen bzw. Eingangswerte $x_i$ (vgl. Figur 1) darstellt. Um den Energieverbrauch zu minimieren, werden die einzelnen Gewichtsfaktoren vorzugsweise lokal direkt neben den entsprechenden AMS-Multiplikatorzellen gespeichert. In einem Standard-CMOS-Prozess - der Zieltechnologie für die Implementierung von Schaltungen nach dieser Erfindung - wird die effizienteste und am einfachsten zu verwendende Speicherimplementierung durch Sätze von statischen 6-MOSFET-Speicherzellen gebildet, die binäre Wörter oder Ziffern darstellen. Daher ist eine Konvertierung von den digitalen binären Speicherworten in zeitliche Pulsbreiten, also ein Digital-Zeit-Wandler (DTC), erforderlich.

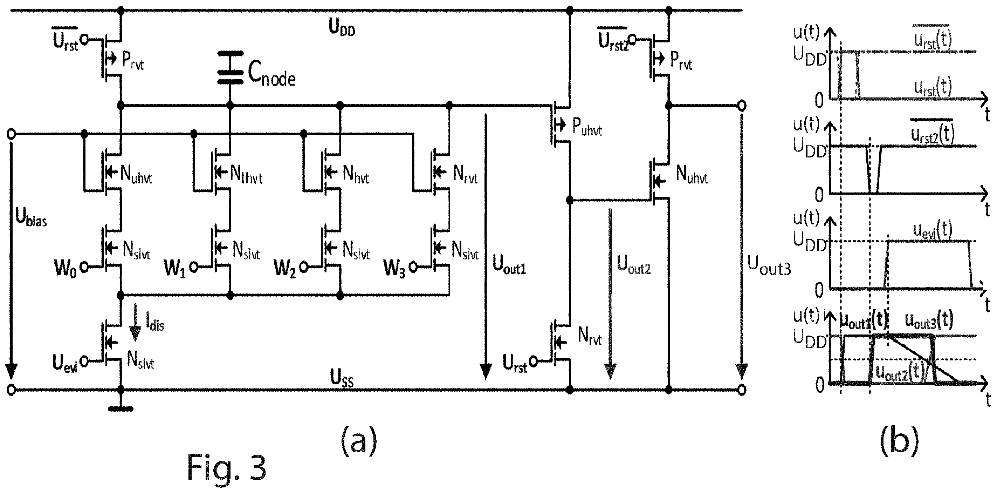

Figur 3a zeigt eine Schaltung, die diese Umwandlung auf Grundlage der Entladung einer parasitären Schaltungsknotenkapazität $C_{node}$ durch einen programmierbaren Strom $I_{dis}$ durchführt. Das Eingangsbinärwort wird durch die Binärsignale $W_0$ bis $W_k$ dargestellt, die von den binären Speicherzellen geliefert werden. Diese Binärsignale steuern die Entladungsgeschwindigkeit des vorgeladenen Knotens $U_{out1}$. Die unterschiedlichen Entladungsströme in den verschiedenen Pfaden über die Schalter-MOSFETs $N_{slvt}$, an deren Gate die Binärsignale $W_0$ bis $W_k$ anliegen, werden durch die unterschiedlichen Schwellenspannungen der MOSFETs über diesen Schalter-MOSFETs eingestellt, die durch die Abkürzungen uhvt (ultrahohe Schwellenspannung), llhvt (hohe Schwellenspannung für niedrigen Leckstrom), hvt (hohe Schwellenspannung) und rvt (reguläre Schwellenspannung) angezeigt werden. Da die Pfadströme durch die Schwellenspannung und nicht durch die Kanalbreite festgelegt werden, können alle MOSFETs in dieser Schaltung eine minimale Kanalbreite aufweisen, was zu einer sehr geringen dynamischen Leistungsaufnahme führt. Zwei weitere vorgeladene und kaskadierte dynamische Verstärkerstufen mit den Ausgangsknoten $U_{out2}$ und $U_{out3}$ bieten Verstärkung und binäre Signalpegel-Regeneration, wenn sie durch die Signale $U_{rst}$ und $U_{rst2}$ in den Auswertemodus versetzt werden. Die beiden Reset-/Vorladesignale $U_{rst}$ und $U_{rst2}$ und das Auswertesignal $U_{ev1}$ sind zeitlich versetzt, wie dies in der Figur 3b dargestellt ist.

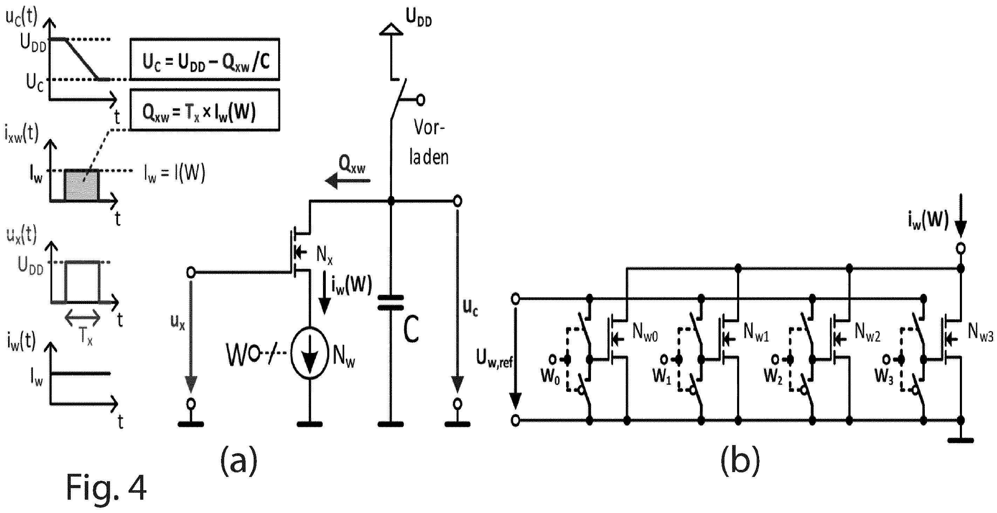

In einer alternativen Ausführungsform werden die Gewichtungs- und Aktivierungseingänge und damit die Rollen der unteren und oberen MOSFETs in dem/den Multiplikatorauswertungspfad(en) von Figur 2 vertauscht, wie dies in Figur 4 dargestellt ist. Die Gewichtung wird nun durch einen konstanten Sourcestrom $I_w$ dargestellt (vgl. Figur 4a), der entweder von einem einzelnen unteren MOSFET oder von einem programmierbaren Satz unterer MOSFETs $N_{Wk}$ mit parallel geschalteten Drains und Sources als Stromquelle Nw geliefert wird. Figur 4b zeigt ein Beispiel für die schaltungstechnische Umsetzung der per Digitalwort W gesteuerten Stromquelle Nw durch ein Array von parallelen unteren MOSFETs $N_{Wk}$. Der zeitliche zweistufige Aktivierungseingang $u_x$, der an das Gate des oberen MOSFET $N_x$ angelegt wird, steuert nun die zeitliche Impulsbreite $T_x$ des aktuellen Entladestroms $i_w(t)$. Im Falle des Satzes aus mehreren MOSFETs $N_{Wk}$ wird der Sourcestrom $I_w$ wiederum durch einen lokalen binären Gewichtsspeicher gesteuert, der die Binärsignale $W_0$ bis $W_k$ liefert.

Der Vorteil der alternativen Ausführungsform der Figur 4 gegenüber der bevorzugten Ausführungsform der Figur 2 besteht darin, dass keine Digital-Zeit-Wandler bzw. Digital-Impulsbreiten-Wandler für die Gewichtsfaktoren an jeder Position des Mischsignal-Multiplizierers erforderlich sind. Der Nachteil der alternativen Ausführungsform gegenüber der bevorzugten Ausführungsform besteht darin, dass zwischen den Aktivierungsausgängen (Signal-Domäne: analoge Spannung oder Ladung) einer neuronalen Netzwerkschicht und dem nachfolgenden Aktivierungseingang der nächsten neuronalen Schicht (Signal-Domäne: Pulsbreite) Ladungs- oder Spannungs-Pulsbreitenwandler notwendig sind. Ein solcher Ladungs-Pulsbreitenwandler kann nach Auswertung durch Wiederaufladen der Kapazität C durch einen Konstantstrom $I_{charge}$, beginnend zu einem vordefinierten Zeitpunkt $t_0$, implementiert werden. Eine Triggerschaltung erkennt den Zeitpunkt $t_1$ der vollständigen Wiederaufladung des Kondensators C. Zwischen den Zeitpunkten $t_0$ und $t_1$ wird eine positive Spannung $u_y = U_{DD}$ für die Dauer $t_y = t_1-t_0$ ausgegeben, wobei $t_y = Q_y/I_{charge}$ proportional zu der Ladung $Q_y$ ist, die durch die AMS-Schaltung aus C entnommen wird.

Die AMS-Multiplizierschaltungen gemäß Figur 2a und Figur 4a arbeiten nur mit vorzeichenlosen Signalen. In der Ladungsgleichung sind sowohl die Ströme $I_x$ (bevorzugte Ausgestaltung) oder $I_w$ (alternative Ausgestaltung) als auch die Impulsbreite $T_w$ (bevorzugte Ausgestaltung) oder $T_x$ (alternative Ausgestaltung) positiv, was zu einer positiven Ladung $Q = I \cdot T$ führt, die in beiden Ausgestaltungen aus dem vorgeladenen Kondensator C gezogen wird. Erweiterungen der Schaltungstopologie, die auf den AMS-Multiplizierern nach Figur 2a und Figur 4a basieren, ermöglichen die Verwendung von vorzeichenbehafteten Signalen.

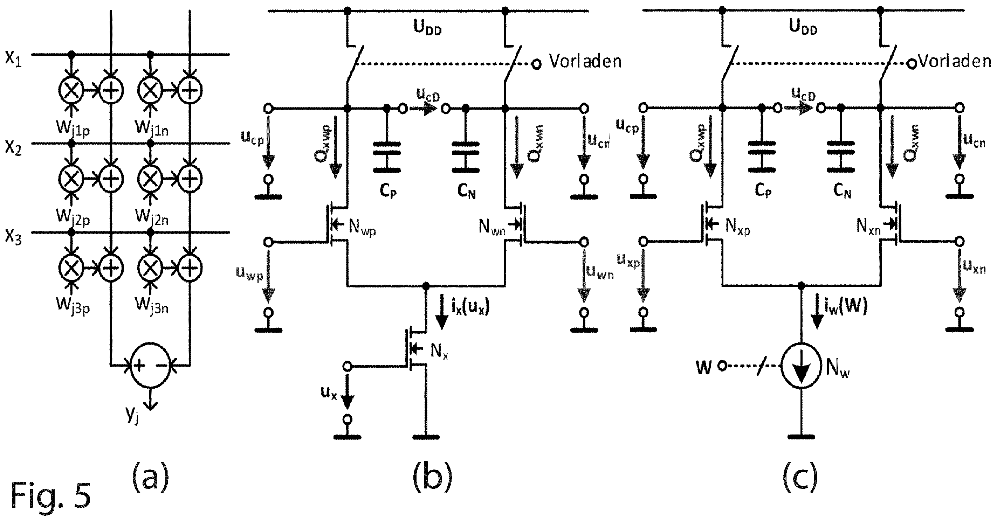

Bei künstlichen neuronalen Netzwerken ist der Aktivierungswertebereich oft auf positive Werte beschränkt. Die Gewichte können jedoch positiv oder negativ sein. Figur 5a zeigt das Blockschaltbild für vorzeichenbehaftete Gewichtsfaktoren unter Verwendung zweier Signale am Aktivierungsausgang des Neurons. Bei einem positiven Gewichtsfaktor $w_{ji}$ werden die beiden Gewichtsanteile auf $w_{jip} = w_{ji}$ und $w_{jin} = 0$ gesetzt. Bei einem negativen Gewichtsfaktor $w_{ji}$ werden die beiden Gewichtsanteile auf $w_{jip} = 0$ und $w_{jin} = -w_{ji}$ gesetzt.

Figur 5b zeigt die Schaltungstopologie zur Implementierung eines vorzeichenbehafteten Gewichts für die bevorzugte Ausgestaltung. Es wird ein MOSFET-Paar $N_{wp}$ und $N_{wn}$ verwendet, wobei deren gemeinsamer Sourceknoten mit dem Drain von $N_x$ verbunden ist und das Paar $N_{wp}$ und $N_{wn}$ den einzelnen MOSFET $N_w$ ersetzt. Die Drains von $N_{wp}$ und $N_{wn}$ sind mit zwei Ausgangsspannungsleitungen $u_{cp}$ bzw. $u_{cn}$ verbunden, die die vorgeladenen Kondensatoren $C_n = C_p$ aufweisen. Das endgültige Ausgangssignal ist die Spannungsdifferenz $u_{cD} = u_{cp} - u_{cn}$ oder die Ladungsdifferenz $Q_D = Q_p - Q_n$. Ein Selektor verbindet das Ausgangssignal $U_{out3}$ des DTC der Figur 3a mit dem entsprechenden Eingang $u_{wp}$ oder $u_{wn}$ des Differentialpaars $N_{wp/n}$ der Figur 5b, je nach Vorzeichen des Gewichtsfaktors. Der andere Eingang des Differentialpaares wird mit Masse verbunden.

Figur 5c zeigt die Schaltungstopologie zur Implementierung eines vorzeichenbehafteten Gewichts für die alternative Ausgestaltung. Es wird ein MOSFET-Paar $N_{xp}$ und $N_{xn}$ verwendet, wobei deren gemeinsamer Sourceknoten wiederum mit dem Drain von $N_w$ verbunden ist und das Paar $N_{xp}$ und $N_{xn}$ den einzelnen MOSFET $N_x$ ersetzt. Die Drains von $N_{xp}$ und $N_{xn}$ sind mit zwei Ausgangsspannungsleitungen $u_{cp}$ bzw. $u_{cn}$ verbunden, die die vorgeladenen Kondensatoren $C_n = C_p$ aufweisen. Das endgültige Ausgangssignal ist wiederum die Spannungsdifferenz $u_{cD} = u_{cp} - u_{cn}$ oder die Ladungsdifferenz $Q_D = Q_p - Q_n$. Ein Selektor verbindet das Aktivierungseingangssignal $u_x$ (Pulsbreitendomäne) aus Figur 3 mit dem entsprechenden Eingang $u_{xp}$ oder $u_{xn}$ des Differenzpaars $N_{xp/n}$ aus Figur 5c, je nach Vorzeichen des Gewichtsfaktors. Der andere Eingang des Differentialpaares wird mit Masse verbunden. Auch hier kann $N_w$ als programmierbare Stromquelle gemäß Figur 4b implementiert werden.

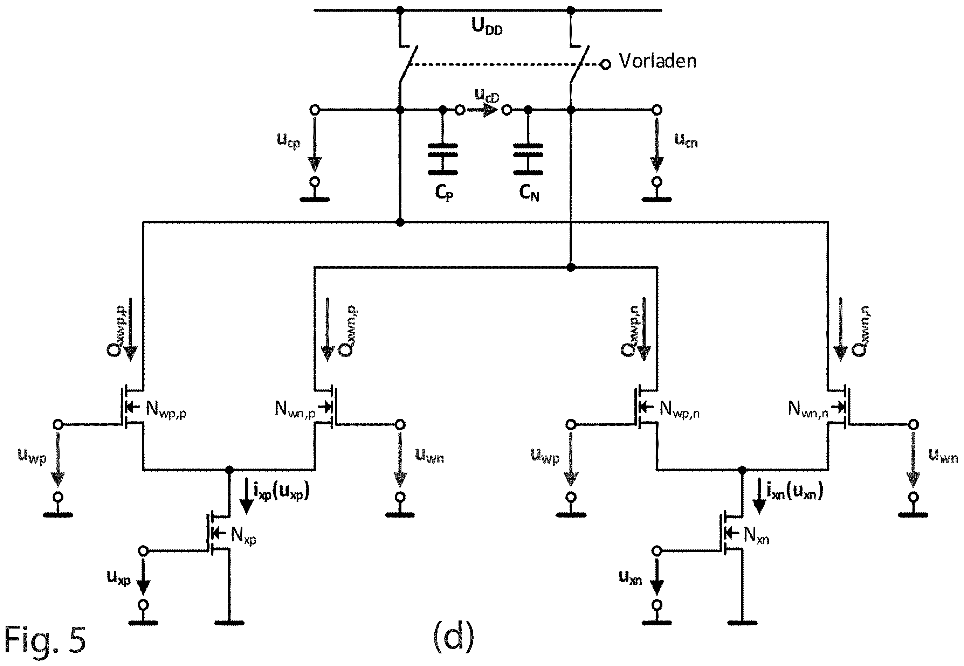

Um sowohl vorzeichenbehaftete Gewichte als auch vorzeichenbehaftete Eingangsaktivierungen bzw. Eingangswerte zu implementieren, müssen die Schaltungstopologien der Figuren 5b und 5c, die eine einzige differenzielle Topologie darstellen, auf doppelt differenzielle Topologien und durch Querverbinden ihrer Ausgänge zu $u_{cp}$ und $u_{cn}$ erweitert werden. Für die bevorzugte Ausgestaltung (Figur 5b) wird das einzelne Differentialpaar $N_x+(N_{wp}-N_{wn})$ verdoppelt, um die doppelt differenzielle Topologie $(N_{xp}+(N_{wp}-N_{wn})_p)-(N_{xn}+(N_{wp}-N_{wn})_n)$ zu bilden, wie dies in Fig. 5d dargestellt ist. Es gibt einen $u_{xp}$- und $u_{xn}$-Eingang für ein vorzeichenbehaftetes differentielles Eingangsaktivierungssignal (Spannungsdomäne), das mit den Gates der beiden $N_{xp}$- und $N_{xn}$-Stromquellen MOSFETs verbunden ist. Das Gewicht $u_{wp}$ (Pulsbreitendomäne) wird sowohl mit $N_{wp,p}$ als auch mit $N_{wp,n}$ verbunden und das Gewicht $u_{wn}$ wird sowohl mit $N_{wn,p}$ als auch mit $N_{wn,n}$ verbunden.

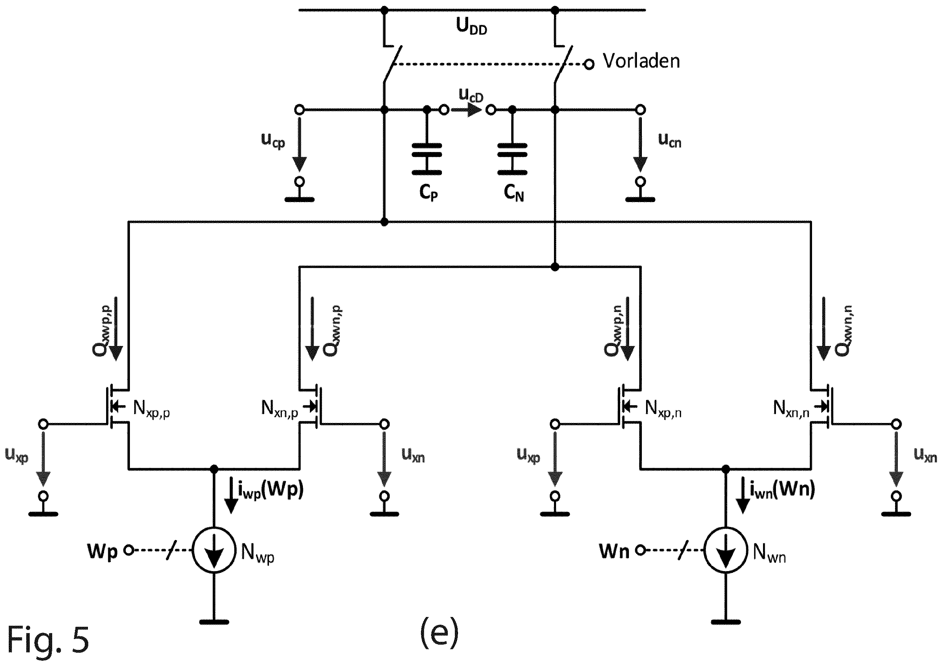

Für die alternative Ausgestaltung (Figur 5c) wird das einzelne Differentialpaar $N_w+(N_{xp}-N_{xn})$ verdoppelt, um die doppelt differenzielle Topologie $(N_{wp}+(N_{xp}-N_{xn})_p)-(N_{wn}+(N_{xp}-N_{xn})_n)$ zu bilden, wie dies in Fig. 5e dargestellt ist. Es gibt einen $u_{xp}$- und $u_{xn}$-Differentialeingang für ein vorzeichenbehaftetes differentielles Eingangsaktivierungssignal (Pulsbreitendomäne); $u_{xp}$ wird sowohl mit $N_{xp,p}$ als auch mit $N_{xp,n}$ verbunden und $u_{xn}$ wird sowohl mit $N_{xn,p}$ als auch mit $N_{xn,n}$ verbunden. $N_{wp}$ ist für positive Gewichtsfaktoren aktive Stromquelle und $N_{wn}$ ist die für negative Gewichtsfaktoren aktive Stromquelle.

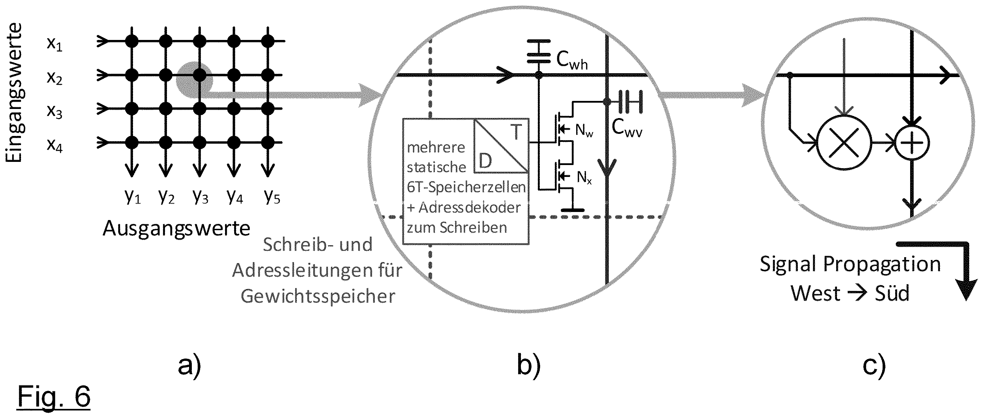

Durch eine matrixartige Anordnung von mehreren AMS-Multiplikations- bzw. eine Anordnung mehrerer Skalarproduktzellen nebeneinander kann eine einzelne neuronale Schicht realisiert werden, wie dies in Figur 6 beispielhaft dargestellt ist. Figur 6a zeigt hierbei eine Anordnung mehrerer nebeneinander angeordneter AMS-Skalarproduktzellen mit n horizontalen Leitungen für den Eingangsaktivierungsvektor $\vec{X}$, m vertikalen Leitungen für den Ausgangsaktivierungsvektor $\vec{Y}$ und Multiplikationszellen, die an jeder Kreuzung platziert sind. Eine derartige Anordnung kann eine Schicht eines neuronalen Netzes auswerten (vgl. Figur 1a).

Die Verbindung der AMS-Multiplikationszelle mit einer horizontalen und einer vertikalen Leitung und die Verbindung zu einem lokalen Gewichtsspeicher (+ Digital-Zeit-Wandler (DTC)) ist in Figur 6b dargestellt. Ein zweites Überlagerungsgitter aus horizontalen und vertikalen Leitungen wird verwendet, um Gewichtsdaten von der Nord- und Ostseite der Matrixanordnung in den lokalen Gewichtsspeicher zu schreiben. Eine Signalflussdiagramm-Darstellung der Schaltung aus Figur 6b ist in Figur 6c dargestellt.

Die in Figur 6 gezeigte Matrixanordnung der AMS-Multiplikationszellen ist in der Lage, eine einzelne Schicht in einem künstlichen neuronalen Netzwerk auszuwerten. Für die Berechnungen eines vollständigen künstlichen neuronalen Netzwerkes müssen mehrere der von der Matrixanordnung durchgeführten Operationen kaskadiert werden. Dies kann durch Rückübertragung der ausgewerteten Matrixausgangssignale $y_i$ auf die Matrixeingänge $x_i$ oder durch Übertragung

der ausgewerteten Matrixausgangssignale $y_i$ auf die Matrixeingänge $x_i$ einer weiteren (anderen) Matrix erfolgen. Für die bevorzugte Ausgestaltung sind die Ausgangs- und Eingangssignale $y_i$ und $x_i$ analoge Ladungs(Q)- oder Spannungs(Q/-C)-Amplitudendomänensignale.

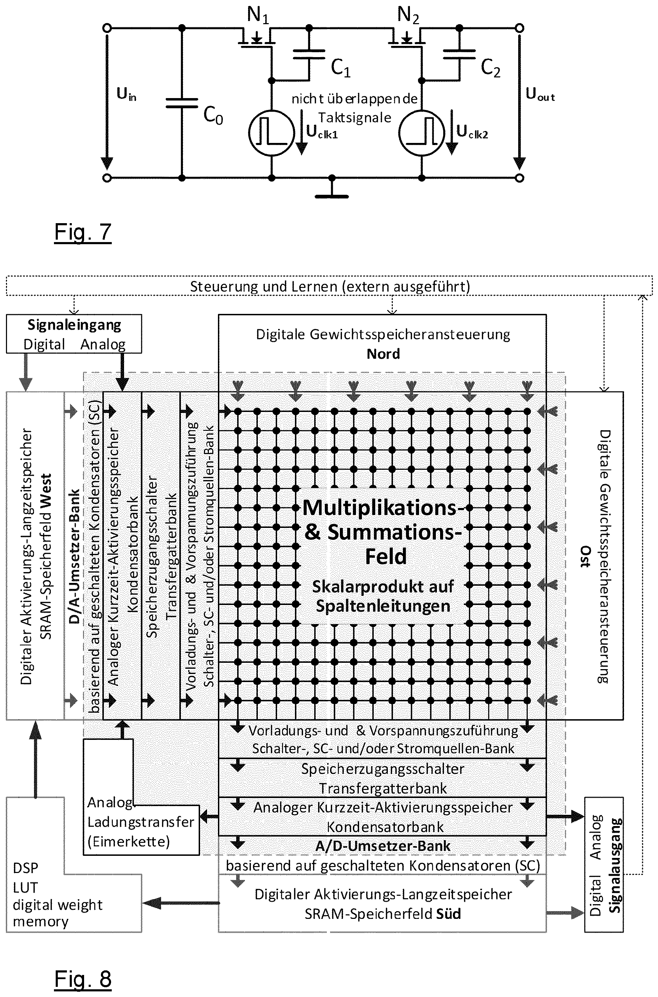

Eine sehr effiziente Methode zur Übertragung der analogen Amplitudendomänensignale von den Ausgängen zurück zu den Eingängen ist der Ladungstransfer. Eine entsprechende Schaltung für den Ladungstransfer (Übertragung eines Ladungsdefizits) ist in Figur 7 beispielhaft dargestellt. Der Vorteil dieser Schaltung besteht darin, dass keine Klasse A-Linearverstärker mit statischer Leistungsaufnahme verwendet werden. Der Ladungstransfer erfolgt ausschließlich über getaktete Common-Gate-Schaltungen mit dynamischer Leistungsaufnahme.

Alternativ kann der Ladungstransfer auch mittels analoger Spannungssignalübertragung durch lineare analoge Pufferverstärker, d.h. auf der Basis von Operationsverstärkern mit Widerständen und/oder geschalteten Kondensatoren erfolgen. Auch eine digitale Signalübertragung durch Zwischenschaltung von A/D- und D/A-Wandlern, vorzugsweise implementiert durch energieeffiziente SC-basierte Wandlungsprinzipien wie SAR und ergänzt durch Mittel zur Verarbeitung großer neuronaler Schichten und zur Implementierung künstlicher Transferfunktionen ist möglich. Dies kann beispielsweise über digitale Speicher und Blöcke zur digitalen Signalverarbeitung erfolgen.

Bei der alternativen Ausgestaltung des vorgeschlagenen Verfahrens sind die Ausgangssignale $y_i$ Signale im Ladungs(Q)- oder Spannungs(Q/C)-Amplitudendomäne, während die Eingangssignale $x_i$ Signale in der Pulsweitendomäne sind. Daher ist für die Signalübertragung von den Matrixausgängen $y_i$ zu den Matrixeingängen $x_i$ ein Ladungs-Pulsbreitenwandler, wie in einem der vorangehenden Abschnitte beschrieben, erforderlich.

Figur 8 zeigt eine beispielhafte Umsetzung des vorgeschlagenen Verfahrens in einer Gesamtarchitektur für einen integrierten neuronalen Netzwerk-Coprozessor, der auf den oben beschriebenen AMS-Prinzipien basiert (schwarze durchgezogene Linienblöcke), ergänzt durch einen parallelen digitalen Signalverarbeitungspfad (graue durchgezogene Linienblöcke) und eine zusätzliche externe Einheit zum Lernen (gestrichelte Linien). Der zentrale Teil ist eine n x m AMS-Multiplikations- und Additionsmatrix, wie sie in Verbindung mit Figur 6a bereits erläutert wurde. An jedem Kreuzungspunkt ist eine Vorwärts-Multiplikations- und Additionseinheit (AMS-Multiplikationszelle, vgl. Figuren 6b und 6c) angeordnet, die es der Matrix ermöglicht, die Neuronenschichten kontinuierlich auszuwerten. Steuereinheiten für den verteilten Gewichtsspeicher befinden sich an der Nord- und Ostecke der Matrix.

Ein Stapel funktioneller Blöcke, die zum Vorbelegen und Beschreiben der analogen Horizontal- und zum Lesen der analogen Vertikalleitungen der Multiplikations- und Additions-Matrix erforderlich sind, befindet sich auf der West- bzw. Südseite der Matrix (Blöcke: Vorladen und Biasinjektion).

Neuronale Netzwerkschichten, die mehr Neuronen als die Matrix-Zeilen- und Spaltennummer n bzw. m haben, können mit Hilfe von analogen Ladungstransferspeichereinheiten an der südlichen Ausgangs- und/oder westlichen Eingangskante mit zusätzlichen Mitteln zur analogen Ladungsaddition unterstützt werden, wie durch die Blöcke "Transfergatterbank" und "Kondensatorbank" in der Figur 8 dargestellt.

Ein energieeffizienter Ladungstransfer von den Neuronenschicht-Aktivierungsausgängen auf der Südseite zu den Eingängen der nächsten Neuronenschicht auf der Westseite kann durch Beibehalten der analogen Ladungsdomäne mit Hilfe der oben beschriebenen analogen Ladungstransferschaltungen realisiert werden. Darüber hinaus können an die südliche Aktivierungsausgangskante leistungseffiziente SC-basierte A/D-Wandler und an die westliche Aktivierungseingangskante D/A-Wandler angeschlossen werden, um eine hybride Auswertung des neuronalen Netzes zu ermöglichen, d.h. Teile, die eine geringe Präzision im analogen Pfad, und Teile, die eine hohe Präzision in einem zusätzlichen digitalen Pfad erfordern. Dieser zusätzliche digitale Pfad kann auch zur Anwendung speziellerer Aktivierungstransferfunktionen verwendet werden.

**Patentansprüche**

1. Verfahren zur analogen Multiplikation mit einer Schaltungsanordnung, die eine Serienschaltung aus einem ersten FET und einem als Stromquelle dienenden zweiten FET oder FET-Array aus mehreren parallel geschalteten zweiten FETs, eine Ladeeinrichtung und wenigstens eine Kapazität aufweist, die über die Ladeeinrichtung vorgeladen und über die Serienschaltung aus dem ersten FET und dem zweiten FET oder FET-Array entladen werden kann, bei dem

- die Kapazität zur Durchführung einer Multiplikation eines ersten Wertes mit einem zweiten Wert vorgeladen,
- der erste Wert als Pulslänge eines Spannungspulses kodiert an das Gate des ersten FETs und
- der zweite Wert als Spannungsamplitude kodiert an das Gate des zweiten FETs oder als binäre Spannungsamplituden kodiert an die Gates der parallel geschalteten zweiten FETs angelegt wird, so dass sich die Kapazität für einen Zeitraum, der durch die Pulslänge des am Gate des ersten FETs anliegenden Spannungspulses vorgegeben wird, mit einem Entladungsstrom, der durch die am Gate des zweiten FETs oder an den Gates der parallel geschalteten zweiten FETs anliegende(n) Spannungsamplitude(n) vorgegeben wird, zumindest teilweise entlädt und ein Ergebnis der Multiplikation aus einer Restladung oder Spannung der Kapazität oder einer Spannungs- oder Ladungsdifferenz zwischen dieser und einer weiteren Kapazität bestimmbar ist.

2. Verfahren zur analogen Berechnung eines Skalarproduktes, das durch Multiplikation eines ersten Wertes mit einem zweiten Wert eines jeweiligen Wertepaares und Summation von Ergebnissen der Multiplikationen für mehrere Wertepaare gebildet wird, mit einer Schaltungsanordnung, die mehrere parallel geschaltete Serienschaltungen aus einem ersten FET und einem als Stromquelle dienenden zweiten FET oder FET-Array aus mehreren parallel geschalteten zweiten FETs, eine Ladeeinrichtung und wenigstens eine Kapazität aufweist, die über die Ladeeinrichtung vorgeladen und über die Serienschaltungen aus dem ersten FET und dem zweiten FET oder FET-Array entladen werden kann, bei dem

- jedem der Wertepaare eine der Serienschaltungen zugeordnet,
- die Kapazität zur Berechnung des Skalarproduktes vorgeladen,
- für jedes der Wertepaare der erste Wert als Pulslänge eines Spannungspulses kodiert an das Gate des ersten FET der zugeordneten Serienschaltung und
- der zweite Wert als Spannungsamplitude kodiert an das Gate des zweiten FET oder als binäre Spannungsamplituden kodiert an die Gates der parallel geschalteten zweiten FETs der zugeordneten Serienschaltung angelegt wird, so dass sich die Kapazität jeweils für einen Zeitraum, der durch die Pulslänge des am Gate des ersten FETs der jeweiligen Serienschaltung anliegenden Spannungspulses vorgegeben wird, mit einem Entladungsstrom, der durch die am Gate des zweiten FETs oder an den Gates der parallel geschalteten zweiten FETs der jeweiligen Serienschaltung anliegende(n) Spannungsamplitude(n) vorgegeben wird, zumindest teilweise entlädt und ein Ergebnis der Berechnung des Skalarproduktes aus einer Restladung oder Spannung der Kapazität oder einer Spannungs- oder Ladungsdifferenz zwischen dieser und einer weiteren Kapazität bestimmbar ist.

3. Verfahren nach Anspruch 2 in einem künstlichen neuronalen Netzwerk, bei dem die Schaltungsanordnung ein künstliches Neuron repräsentiert und jedes Wertepaar jeweils durch einen Gewichtsfaktor und einen Eingangswert des künstlichen Neurons gebildet wird.

4. Verfahren nach Anspruch 3,
   **dadurch gekennzeichnet,**
   **dass** als erster Wert jedes Wertepaares der Gewichtsfaktor und als zweiter Wert der Eingangswert gewählt wird.

5. Verfahren nach Anspruch 3,
   **dadurch gekennzeichnet,**
   **dass** als erster Wert jedes Wertepaares der Eingangswert und als zweiter Wert der Gewichtsfaktor gewählt wird.

6. Verfahren nach Anspruch 4,
   **dadurch gekennzeichnet,**
   **dass** der Gewichtsfaktor als binäre Ziffernfolge bereitgestellt wird, wobei jede Ziffer der Ziffernfolge über einen Digital-Zeit-Wandler die Pulslänge am Gate des ersten FET steuert.

7. Verfahren nach Anspruch 5,
   **dadurch gekennzeichnet,**
   **dass** der Gewichtsfaktor als binäre Ziffernfolge bereitgestellt wird, wobei jede Ziffer der Ziffernfolge als Spannungsamplitude kodiert einen zweiten FET der parallel geschalteten zweiten FETs steuert.

8. Verfahren nach einem der Ansprüche 3 bis 7,
   **dadurch gekennzeichnet,**
   **dass** die parallel geschalteten Serienschaltungen aus einem ersten FET und einem als Stromquelle dienenden zweiten FET oder FET-Array aus mehreren parallel geschalteten zweiten FETs matrixartig an Kreuzungspunkten zwischen horizontalen Verbindungen für einen Eingangsvektor und vertikalen Verbindungen für einen Ausgangsvektor in einer Schicht des künstlichen neuronalen Netzwerks eingesetzt werden, um Berechnungen einer Schicht des künstlichen neuronalen Netzwerkes durchzuführen.

9. Verfahren nach einem der Ansprüche 1 bis 8,
   **dadurch gekennzeichnet,**
   **dass** die Schaltungsanordnung für eine Verarbeitung vorzeichenbehafteter erster Werte in jeder der Serienschaltungen zwei parallele Schaltungszweige aufweist, die mit dem zweiten FET oder FET-Array seriell verbunden sind und jeweils einen ersten FET aufweisen, wobei ein erster der beiden Schaltungszweige mit der Kapazität und ein zweiter der beiden Schaltungszweige mit einer zweiten Kapazität verbunden ist, die über die Ladeeinrichtung vorgeladen und über die Serienschaltung aus dem ersten FET des zweiten Schaltungszweiges und dem zweiten FET oder FET-Array entladen werden kann, wobei der jeweilige erste Wert als Pulslänge eines Spannungspulses kodiert in Abhängigkeit von seinem Vorzeichen entweder an das Gate des ersten FETs des ersten Schaltungszweiges oder an das Gate des ersten FETs des zweiten Schaltungszweiges angelegt wird und ein Ergebnis der Multiplikation oder Berechnung des Skalarproduktes aus einer Spannungs- oder Ladungsdifferenz zwischen den beiden Kapazitäten bestimmbar ist.

10. Neuronales Netzwerk mit einem oder mehreren Schichten mit künstlichen Neuronen,

bei dem die Neuronen wenigstens einer der Schichten jeweils eine Schaltungsanordnung aufweisen, die

- mehrere parallel geschaltete Serienschaltungen aus einem ersten FET und einem als Stromquelle dienenden zweiten FET,
- eine Ladeeinrichtung und
- eine Kapazität aufweist, die über die Ladeeinrichtung vorgeladen und über die Serienschaltungen aus dem ersten FET und dem zweiten FET entladen werden kann,

wobei Komponenten von Gewichtsvektoren als Pulslänge eines Spannungspulses kodiert an Gates der ersten FETs und Komponenten von Eingangsvektoren als Spannungsamplitude kodiert an Gates der zweiten FETs angelegt werden.

11. Neuronales Netzwerk mit einem oder mehreren Schichten mit künstlichen Neuronen,

bei dem die Neuronen wenigstens einer der Schichten jeweils eine Schaltungsanordnung aufweisen, die

- mehrere parallel geschaltete Serienschaltungen aus einem ersten FET und einem als Stromquelle dienenden zweiten FET oder FET-Array aus mehreren parallel geschalteten zweiten FETs,
- eine Ladeeinrichtung und
- eine Kapazität aufweist, die über die Ladeeinrichtung vorgeladen und über die Serienschaltungen aus dem ersten FET und dem zweiten FET oder FET-Array entladen werden kann,

wobei Komponenten von Eingangsvektoren als Pulslänge eines Spannungspulses kodiert an Gates der ersten FETs und Komponenten von Gewichtsvektoren als Spannungsamplitude kodiert an Gates der zweiten FETs oder als binäre Spannungsamplituden kodiert an die Gates der parallel geschalteten zweiten FETs der Serienschaltungen angelegt werden.

12. Neuronales Netzwerk nach Anspruch 10 oder 11,
**dadurch gekennzeichnet,**
**dass** zwischen den Schaltungsanordnungen aufeinanderfolgender Schichten des neuronalen Netzwerkes Transferschaltungen zum Transfer eines Ladungsdefizits der Kapazität der jeweiligen Schaltungsanordnung der vorangegangenen Schicht an Gates der zweiten FETs der Schaltungsanordnungen der nachfolgenden Schicht ausgebildet sind.

13. Neuronales Netzwerk nach einem der Ansprüche 10 bis 12,
**dadurch gekennzeichnet,**
**dass** vor jeder Schaltungsanordnung eine Schaltung zur Wandlung digitaler Werte in Pulslängen eines Spannungspulses angeordnet ist.

14. Neuronales Netzwerk nach einem der Ansprüche 10 bis 13, **dadurch gekennzeichnet,**
**dass** die Schaltungsanordnung für eine Verarbeitung vorzeichenbehafteter Komponenten der Gewichtsvektoren in jeder der Serienschaltungen zwei parallele Schaltungszweige aufweist, die mit dem zweiten FET oder FET-Array verbunden sind und jeweils einen ersten FET aufweisen, wobei ein erster der beiden Schaltungszweige mit der Kapazität und ein zweiter der beiden Schaltungszweige mit einer zweiten Kapazität verbunden ist, die über die Ladeeinrichtung vorgeladen und über die Serienschaltung aus dem ersten FET des zweiten Schaltungszweiges und dem zweiten FET oder FET-Array entladen werden kann, wobei die jeweilige Komponente als Pulslänge eines Spannungspulses kodiert in Abhängigkeit von ihrem Vorzeichen durch die Steuereinrichtung entweder an das Gate des ersten FETs des ersten Schaltungszweiges oder an das Gate des ersten FETs des zweiten Schaltungszweiges angelegt wird.

**Claims**

1. Method for the analogue multiplication with a circuit assembly, which has a series circuit comprising a first FET and a second FET, or FET array comprising a plurality of parallel-connected second FETs, serving as a current source, a charging device, and at least one capacitance, which can be precharged by way of the charging device, and can be discharged by way of the series circuit comprising the first FET and the second FET, or FET array, in which

   - the capacitance is precharged for the execution of a multiplication of a first value by a second value,
   - the first value, encoded as a pulse width of a voltage pulse, is applied to the gate of the first FET, and
   - the second value, encoded as a voltage amplitude, is applied to the gate of the second FET, or, encoded as binary voltage amplitudes, is applied to the gates of the parallel-connected second FETs, so that the capacitance is discharged for a period of time, which is specified by the pulse width of the voltage pulse applied to the gate of the first FET, with a discharge current, which is specified by the voltage amplitude(s) applied to the gate of the second FET, or to the gates of the parallel-connected second FETs, and a result of the multiplication can be determined from a residual charge or voltage of the capacitance, or from a voltage difference or charge difference between the latter and a further capacitance.

2. Method for the analogue calculation of a scalar product, which is formed by the multiplication of a first value by a second value of a respective value pair, and the summation of results of the multiplications for a plurality of value pairs, with a circuit assembly, which has a plurality of parallel-connected series circuits comprising a first FET and a second FET, or FET array comprising a plurality of parallel-connected second FETs, serving as a current source, a charging device, and at least one capacitance, which can be precharged by way of the charging device, and can be discharged by way of the series circuits comprising the first FET and the second FET, or FET array, wherein

   - each of the value pairs is associated with one of the series circuits,
   - the capacitance is precharged for the calculation of the scalar product
   - for each of the value pairs, the first value, encoded as a pulse width of a voltage pulse, is applied to the gate of the first FET of the associated series circuit, and
   - the second value, encoded as a voltage amplitude, is applied to the gate of the second FET, or, encoded as binary voltage amplitudes, to the gates of the parallel-connected second FETs of the associated series circuit,

   such that in each case the capacitance is at least partially discharged for a period of time, which is specified by the pulse width of the voltage pulse applied to the gate of the first FET of the respective series circuit, with a discharge current, which is specified by the voltage amplitude(s) applied to the gate of the second FET, or to the gates of the parallel-connected second FETs of the respective series circuit, and a result of the calculation of the scalar product can be determined from a residual charge or voltage of the capacitance, or from a voltage or charge difference between the latter and a further capacitance.

3. Method according to Claim 2 in an artificial neural network, in which the circuit assembly represents an artificial neuron ,and each value pair is respectively formed by a weight factor and an input value of the artificial neuron.

4. Method according to Claim 3,
   **characterised in that**
   the weight factor is selected as the first value of each value pair, and the input value is selected as the second value.

5. Method according to Claim 3,
   **characterised in that**
   the input value is selected as the first value of each value pair, and the weight factor is selected as the second value.

6. Method according to Claim 4,
   **characterised in that**
   the weight factor is provided as a binary digit sequence, wherein each digit of the digit sequence controls the pulse width at the gate of the first FET by way of a digital-time converter.

7. Method according to Claim 5,

**characterised in that**
the weight factor is provided as a binary digit sequence, wherein each digit of the digit sequence, encoded as a voltage amplitude, controls a second FET of the parallel-connected second FETs.

8. Method according to one of the Claims 3 to 7,
   **characterised in that**
   the parallel-connected series circuits, comprising a first FET and a second FET, or an FET array comprising a plurality of parallel-connected second FETs, serving as a current source, are used in a matrix-like manner at crossing points between horizontal connections for an input vector, and vertical connections for an output vector, in a layer of the artificial neural network, so as to execute calculations of a layer of the artificial neural network.

9. Method according to one of the Claims 1 to 8,
   **characterised in that**
   the circuit assembly for processing signed first values in each of the series circuits comprises two parallel circuit branches, which are serially connected to the second FET, or FET array, and in each case comprise a first FET, wherein a first of the two circuit branches is connected to the capacitance, and a second of the two circuit branches is connected to a second capacitance, which can be precharged by way of the charging device, and can be discharged by way of the series circuit comprising the first FET of the second circuit branch and the second FET, or FET array, wherein the respective first value, encoded as the pulse width of a voltage pulse, is applied, depending on its sign, either to the gate of the first FET of the first circuit branch, or to the gate of the first FET of the second circuit branch, and a result of the multiplication or calculation of the scalar product can be determined from a voltage difference or charge difference between the two capacitors.

10. Neural network with one or more layers of artificial neurons,

    in which the neurons of at least one of the layers in each case comprise a circuit assembly comprising:

    - a plurality of parallel-connected series circuits comprising a first FET and a second FET, serving as a current source,
    - a charging device, and
    - a capacitance, which can be precharged by way of the charging device, and can be discharged by way of the series circuits comprising the first FET and the second FET,

    wherein components of weight vectors, encoded as pulse widths of a voltage pulse, are applied to gates of the first FETs, and components of input vectors, encoded as voltage amplitudes, are applied to gates of the second FETs.

11. Neural network with one or more layers of artificial neurons,

    wherein the neurons of at least one of the layers in each case have a circuit array, which comprises:

    - a plurality of parallel-connected series circuits comprising a first FET, and a second FET, or an FET array comprising a plurality of parallel-connected second FETs, serving as a current source,
    - a charging device, and
    - a capacitance, which can be precharged by way of the charging device, and can be discharged by way of the series circuits of the first FET and the second FET, or FET array,

    wherein components of input vectors, encoded as pulse widths of a voltage pulse, are applied to gates of the first FETs, and components of weight vectors, encoded as voltage amplitudes, are applied to gates of the second FETs, or, encoded as binary voltage amplitudes, are applied to the gates of the parallel-connected second FETs of the series circuits.

12. Neural network according to Claim 10 or 11,
    **characterised in that**
    transfer circuits are designed between the circuit assemblies of successive layers of the neural network, for the transfer of a charge deficit of the capacitance of the respective circuit assembly of the preceding layer to gates of the second FETs of the circuit assemblies of the following layer.

13. Neural network according to one of the Claims 10 to 12,

**characterised in that**
a circuit, for the conversion of digital values into pulse widths of a voltage pulse, is arranged upstream of each circuit assembly.

14. Neural network according to one of the Claims 10 to 13, **characterised in that**
the circuit assembly for the processing of signed components of the weight vectors in each of the series circuits has two parallel circuit branches, which are connected to the second FET, or FET array, and in each case have a first FET, wherein a first of the two circuit branches is connected to the capacitance, and a second of the two circuit branches is connected to a second capacitance, which can be precharged by way of the charging means, and can be discharged by way of the series connection of the first FET of the second circuit branch and the second FET, or FET array, wherein the respective component, encoded as the pulse width of a voltage pulse, is applied, depending on its sign, by the control device either to the gate of the first FET of the first circuit branch, or to the gate of the first FET of the second circuit branch.

**Revendications**

1. Procédé de multiplication analogique comportant un agencement de circuit, qui comprend un circuit en série constitué d'un premier FET et un deuxième FET ou un réseau de FET servant de source de courant, constitué de plusieurs deuxièmes FET connectés en parallèle, un dispositif de charge et au moins une capacité, qui peut être préchargé via le dispositif de charge et déchargé via la connexion en série du premier FET et du deuxième FET ou du réseau de FET, dans lequel :

   - la capacité est préchargée pour effectuer une multiplication d'une première valeur par une deuxième valeur,
   - la première valeur est codée comme durée d'impulsion d'une impulsion de tension sur la grille du premier FET, et
   - la deuxième valeur est codée comme amplitude de tension sur la grille du deuxième FET ou comme amplitudes de tension binaires sur les grilles des deuxièmes FET connectés en parallèle, de sorte que la capacité se décharge au moins partiellement pendant une durée, qui est déterminée par la durée d'impulsion de l'impulsion de tension sur la grille du premier FET, avec un courant de décharge, qui est déterminé par l'amplitude (ou les amplitudes) de tension appliquée à la grille du deuxième FET ou aux grilles des deuxièmes FETs connectés en parallèle et un résultat de la multiplication à partir d'une charge ou d'une tension résiduelle de la capacité ou d'une différence de tension ou de charge entre celle-ci et une capacité supplémentaire peut être déterminé.

2. Procédé de calcul analogique d'un produit scalaire, qui est obtenu en multipliant une première valeur par une deuxième valeur d'une paire de valeurs respective et en additionnant les résultats des multiplications pour plusieurs paires de valeurs, comportant un agencement de circuit qui présente plusieurs circuits en série connectés en parallèle, constitués d'un premier FET et d'un deuxième FET servant de source de courant ou un réseau de FET constitué de plusieurs deuxièmes FET connectés en parallèle, un dispositif de charge et au moins une capacité, qui peut être préchargé par le dispositif de charge et déchargé par les circuits en série constitués du premier FET et du deuxième FET ou du réseau de FET, dans lequel :

   - chaque paire de valeurs est associée à un des circuits en série,
   - la capacité est préchargée pour le calcul du produit scalaire,
   - pour chaque paire de valeurs, la première valeur est codée comme la durée d'impulsion d'une impulsion de tension à la grille du premier FET du circuit en série associé et
   - la deuxième valeur, codée comme amplitude de tension à la grille du deuxième FET ou codée comme amplitudes de tension binaires, est appliquée aux grilles des deuxièmes FET connectés en parallèle du circuit en série associé, de sorte que la capacité soit au moins partiellement déchargée pendant une période définie par la durée d'impulsion de l'impulsion de tension appliquée à la grille du premier FET du circuit en série respectif, avec un courant de décharge, qui est défini par l'amplitude (ou les amplitudes) de tension appliquée(s) à la grille du deuxième FET ou aux grilles des deuxièmes FET connectés en parallèle du circuit en série respectif, et un résultat du calcul du produit scalaire à partir d'une charge ou d'une tension résiduelle de la capacité ou d'une différence de tension ou de charge entre celle-ci et une capacité supplémentaire peut être déterminé.

3. Procédé selon la revendication 2 dans un réseau de neurones artificiels, dans lequel l'agencement de circuit représente un neurone artificiel et chaque paire de valeurs est formée par un facteur de pondération et une valeur d'entrée du neurone artificiel.

**4.** Procédé selon la revendication 3, **caractérisé en ce que** la première valeur de chaque paire de valeurs est le facteur de pondération et la deuxième valeur est la valeur d'entrée.

**5.** Procédé selon la revendication 3, **caractérisé en ce que** la première valeur de chaque paire de valeurs est la valeur d'entrée et la deuxième valeur est le facteur de pondération.

**6.** Procédé selon la revendication 4, **caractérisé en ce que** le facteur de pondération est fourni sous forme de séquence binaire, dans lequel chaque chiffre de la séquence binaire commande la durée d'impulsion à la grille du premier FET via un convertisseur numérique-analogique.

**7.** Procédé selon la revendication 5, **caractérisé en ce que** le facteur de pondération est fourni sous forme d'une séquence binaire, dans lequel chaque chiffre de la séquence, codé comme une amplitude de tension, commande un deuxième transistor FET parmi les deuxièmes transistors FET connectés en parallèle.

**8.** Procédé selon une des revendications 3 à 7, **caractérisé en ce que** les circuits en série connectés en parallèle, constitués d'un premier transistor FET et d'un deuxième transistor FET servant de source de courant ou un réseau de transistors FET constitué de plusieurs deuxièmes transistors FET connectés en parallèle, sont utilisés de manière matricielle aux points d'intersection entre les connexions horizontales d'un vecteur d'entrée et les connexions verticales d'un vecteur de sortie, dans une couche du réseau de neurones artificiels, afin d'effectuer les calculs d'une couche du réseau de neurines artificiels.

**9.** Procédé selon une quelconque des revendications 1 à 8, **caractérisé en ce que** l'agencement de circuit pour le traitement des premières valeurs signées dans chacun des circuits en série présente deux branches de circuit parallèles, qui sont connectées en série au deuxième FET ou réseau de FET et présentent chacune un premier FET, dans lequel une première des deux branches de circuit est connectée à la capacité et une deuxième des deux branches de circuit est connectée à une deuxième capacité, préchargée par un dispositif de charge et déchargée par le circuit en série constitué du premier FET de la deuxième branche de circuit et du deuxième FET ou réseau de FET, dans lequel la première valeur respective, codée comme durée d'impulsion d'une impulsion de tension, est appliquée, en fonction de son signe, soit à la grille du premier FET de la première branche de circuit, soit à la grille du premier FET de la deuxième branche de circuit et un résultat de la multiplication ou du calcul du produit scalaire peut être déterminé à partir de la différence de tension ou de charge entre les deux capacités.

**10.** Réseau de neurones comportant une ou plusieurs couches de neurones artificiels, dans lequel les neurones d'au moins une des couches possèdent respectivement un agencement de circuit, qui présente :

- plusieurs circuits en série connectés en parallèle, constitués d'un premier transistor à effet de champ (FET) et d'un deuxième FET servant de source de courant,
- un dispositif de charge, et
- une capacité, qui peut être préchargée via le dispositif de charge et déchargée via les circuits en série du premier FET et du deuxième FET,

dans lequel les composantes des vecteurs de poids, codées comme durée d'impulsion d'une impulsion de tension, sont appliquées à la grille du premier FET, et les composantes des vecteurs d'entrée, codées comme amplitude de tension, sont appliquées à la grille du deuxième FET.

**11.** Réseau de neurones comportant une ou plusieurs couches de neurones artificiels, dans lequel les neurones d'au moins une des couches possèdent respectivement un agencement de circuit, qui présente :

- plusieurs circuits en série connectés en parallèle, constitués d'un premier transistor à effet de champ (FET) et d'un deuxième FET servant de source de courant ou un réseau de FET constitué de plusieurs deuxièmes FET connectés en parallèle,
- un dispositif de charge, et
- une capacité, qui peut être préchargée par le dispositif de charge et déchargée par les circuits en série constitués du premier FET et du deuxième FET ou du réseau de FET, dans lequel les composantes des vecteurs d'entrée, codées comme durée d'impulsion d'une impulsion de tension, sont appliquées à la grille du premier FET, et les composantes des vecteurs de poids, codées comme amplitude de tension, sont appliquées à la grille du deuxième FET ou codées sous forme d'amplitudes de tension binaires, sont appliquées à la grille du deuxième FET connecté en parallèle des circuits en série.

**12.** Réseau de neurones selon la revendication 10 ou 11, **caractérisé en ce que** des circuits de transfert sont formés entre les circuits des couches successives du réseau de neurones pour transférer un déficit de charge de la capacité de l'agencement de circuit respectif de la couche précédente vers la grille du deuxième FET des agencements de circuit de la couche suivante.

**13.** Réseau de neurones selon une quelconque des revendications 10 à 12, **caractérisé en ce que** un circuit de conversion des valeurs numériques en durées d'impulsions d'une impulsion de tension est disposé en amont de chaque agencement de circuit.

**14.** Réseau de neurones selon une des revendications 10 à 13, **caractérisé en ce que** l'agencement de circuit pour le traitement des composantes signées des vecteurs de poids dans chacun des circuits en série présente deux branches de circuit parallèles, qui sont connectées au deuxième FET ou réseau de FET et présentent respectivement un premier FET, dans lequel une première des deux branches de circuit est connectée à la capacité et une deuxième des deux branches de circuit est connectée à une deuxième capacité, qui peut être préchargée par le dispositif de charge et déchargée par le circuit en série du premier FET de la deuxième branche de circuit et du deuxième FET ou réseau de FET, dans lequel la composante respective, codée comme durée d'impulsion d'une impulsion de tension, est appliquée par le dispositif de commande, en fonction de son signe, soit à la grille du premier FET de la première branche de circuit, soit à la grille du premier FET de la deuxième branche de circuit.

(a)

(b)

Fig. 1

EP 4 150 502 B1

Fig. 2

(a)

(b)

Fig. 3

EP 4 150 502 B1

Fig. 4

(a)

(b)

$u_C(t)$

$U_{DD}$

$U_C$

$t$

$U_C = U_{DD} - Q_{xw}/C$

$Q_{xw} = T_x \times I_w(W)$

$i_{xw}(t)$

$I_w$

$I_w = I(W)$

$t$

$u_x(t)$

$U_{DD}$

$T_x$

$t$

$i_w(t)$

$I_w$

$t$

$U_{DD}$

Vor-laden

$Q_{xw}$

$N_x$

$i_w(W)$

$C$

$u_c$

$u_x$

$W$

$N_w$

$U_{w,ref}$

$W_0$

$N_{w0}$

$W_1$

$N_{w1}$

$W_2$

$N_{w2}$

$W_3$

$N_{w3}$

$i_w(W)$

EP 4 150 502 B1

Fig. 5   (a)   (b)   (c)

EP 4 150 502 B1

Fig. 5

(d)

Fig. 5                    (e)

Fig. 6

a)

b)

c)

EP 4 150 502 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4956564 A

**In der Beschreibung aufgeführte Nicht-Patentliteratur**

- **M. BAVANDPOUR et al.** Mixed-Signal Neuromorphic Inference Accelerators: Recent Results and Future Prospects. *IEEE International Electron Devices Meeting (IEDM)*, 2018